# EUROPÄISCHE PATENTSCHRIFT

(11) **EP 2 280 600 B1**
(45) Veröffentlichungstag und Bekanntmachung des Hinweises auf die Patenterteilung: **28.02.2018**
(21) Anmeldenummer: 09738210.5
(22) Anmeldetag: 30.04.2009
(51) Int. Cl.: A01N 25/04

(54) **VERBESSERTE MIKROEMULSION MIT BREITEM ANWENDUNGSBEREICH**
IMPROVED MICROEMULSION WITH A WIDE RANGE OF APPLICATIONS
MICROÉMULSION AMÉLIORÉE AYANT UN DOMAINE D'APPLICATION LARGE

(30) Priorität: 02.05.2008 EP 08155572
(43) Veröffentlichungstag der Anmeldung: 09.02.2011
(73) Patentinhaber: BASF SE, 67056 Ludwigshafen am Rhein (DE)
(72) Erfinder: TARANTA, Claude, 76297 Stutensee (DE); MEIER, Wolfgang, 67117 Limburgerhof (DE); BORK, Thomas, 67593 Westhofen (DE); STRAUSS, Karl, 67117 Limburgerhof (DE); LEVY, Tatjana, 68165 Mannheim (DE); MONTAG, Jurith, 67117 Limburgerhof (DE)
(74) Vertreter: BASF IP Association
(86) Internationale Anmeldenummer: PCT/EP2009/055249
(87) Internationale Veröffentlichungsnummer: WO 2009/133166

(56) Entgegenhaltungen:
- EP-A- 1 702 607
- WO-A-96/01305
- WO-A-2008/043807
- WO-A1-2008/043973
- FR-A1- 2 609 631
- US-A- 5 911 915
- RHEE ET AL: "Formulation of Parenteral Microemulsion Containing Itraconazole" ARCHIVES OF PHARMACEUTICAL RESEARCH, Bd. 30, Nr. 1, 2007, Seiten 114-123, XP002498610 Korea
- DATABASE WPI Section Ch, Week 200479 Thomson Scientific, London, GB; Class C02, AN 2004-802979 XP002498611 KARAKOTOV ET AL: "Tebuconazole-based fungicidal composition" & RU 2 238 649 C1 (SHCHELKOVO AGROKHIM STOCK CHEM) 27. Oktober 2004 (2004-10-27) & RU 2 238 649 C1 27. Oktober 2004 (2004-10-27)
- TOMSIC ET AL: "Ternary systems of nonionic surfactant Brij 35, water and various simple alcohols: Structural investigations by small-angle X-ray scattering and dynamic light scattering" JOURNAL OF COLLOID AND INTERFACE SCIENCE, ACADEMIC PRESS, NEW YORK, NY, US, Bd. 294, Nr. 1, 1. Februar 2006 (2006-02-01), Seiten 194-211, XP005166639 ISSN: 0021-9797
- SKELTON P R ET AL: "FORMULATION OF PESTICIDE MICROEMULSIONS" ASTM SPECIAL TECHNICAL PUBLICATION, PHILADELPHIA, PA, Bd. 8, Nr. 980, 1. Januar 1989 (1989-01-01), Seiten 36-45, XP002053622 ISSN: 0066-0558
- RHEE ET AL: "Formulation of Parenteral Microemulsion Containing Itraconazole", ARCHIVES OF PHARMACAL RESEARCH, NATL. FISHERIES UNIVERSITY, PUSAN, KR, vol. 30, no. 1, 1 January 2007 (2007-01-01), pages 114-123, XP002498610, ISSN: 0253-6269, DOI: 10.1007/BF02977787
- KARAKOTOV S D ET AL: "Tebuconazole-based fungicidal composition", WPI/THOMSON,, vol. 2004, no. 79, 27 October 2004 (2004-10-27), XP002498611,
- TOMSIC M ET AL: "Ternary systems of nonionic surfactant Brij 35, water and various simple alcohols: Structural investigations by small-angle X-ray scattering and dynamic light scattering", JOURNAL OF COLLOID AND INTERFACE SCIENCE, ACADEMIC PRESS, NEW YORK, NY, US, vol. 294, no. 1, 1 February 2006 (2006-02-01), pages 194-211, XP024909058, ISSN: 0021-9797, DOI: 10.1016/J.JCIS.2005.06.088 [retrieved on 2006-02-01]
- SKELTON P R ET AL: "FORMULATION OF PESTICIDE MICROEMULSIONS", ASTM SPECIAL TECHNICAL PUBLICATION, PHILADELPHIA, PA, US, vol. 8, no. 980, 1 January 1989 (1989-01-01), pages 36-45, XP002053622, ISSN: 0066-0558
- SHELL CHEMICALS: "Methyl PROXITOL Acetate U5126 Glycol Ether Acetates", INTERNET CITATION, 16 March 2007 (2007-03-16), XP007914204, Retrieved from the Internet: URL:http://www.scdynamiccontent.shell.com/ Files/propyleneoxideglycolethersandacetate s_methylproxitolacetate_americas.pdf [retrieved on 2010-07-27]

## Beschreibung

Die vorliegende Erfindung betrifft eine Mikroemulsion umfassend wenigstens einen Wirkstoff, wenigstens ein polares Lösungsmittel, gegebenenfalls wenigstens ein unpolares Lösungsmittel, wenigstens ein nichtionisches Tensid, gegebenenfalls weitere Additive, und Wasser, wobei die Mikroemulsion keine anionischen Tenside enthält, sowie ein Verfahren zur Herstellung dieser Mikroemulsion durch Mischen der einzelnen Komponenten und die Verwendung dieser Mikroemulsion zur Behandlung von Pflanzen.

Mikroemulsionen enthaltend entsprechende Wirkstoffe sind aus dem Stand der Technik bereits bekannt.

Im Allgemeinen wird unter einer Mikroemulsion eine klare, optisch isotrope, flüssige Mischung von wenigstens zwei Flüssigkeiten und wenigstens einer oberflächenaktiven Substanz verstanden. Es liegt ein 2-Phasen-System vor, im Gegensatz zu mizellaren Lösungen, welche als eine Phase erachtet werden. Mikroemulsionen sind thermodynamisch stabile Dispersionen einer Flüssigkeit in einer anderen, stabilisiert durch eine Schicht an oberflächenaktiver Substanz zwischen den Phasen. Die Oberflächenspannung zwischen den beiden Phasen ist extrem niedrig.

WO 2006/030006 A1 offenbart eine klare, auf Wasser basierende Mikroemulsion enthaltend das antifugale Reagenz Flutriafol und deren Verwendung als Behandlungsmittel für Saatgut. Die Mikroemulsion gemäß der genannten Schrift enthält neben dem Wirkstoff Flutriafol wenigstens eine in Wasser unlösliche Flüssigkeit, sowie wenigstens eine anionische oberflächenaktive Substanz. Des Weiteren liegt in der Mikroemulsion wenigstens ein Frostschutzmittel ausgewählt aus der Gruppe bestehend aus Ethylenglycol, Diethylenglycol, Propylenglycol und Mischungen davon, vor. WO 2006/030006 A1 offenbart keine Mikroemulsion, die einen Wirkstoff und keine anionischen, oberflächenaktiven Substanzen enthält.

EP 0 728 414 A2 offenbart eine Mikroemulsion enthaltend 3-Isothiazolon-Verbindungen, ein oberflächenaktives System umfassend eine nicht-ionische, oberflächenaktive Substanz und eine anionische, oberflächenaktive Substanz sowie Wasser. EP 0 728 414 A2 offenbart jedoch keine Mikroemulsion, die einen Wirkstoff und keine anionischen, oberflächenaktiven Substanzen enthält.

Eine Kombination von nicht-ionischen und anionischen, oberflächenaktiven Substanzen in Mikroemulsionen, die einen Wirkstoff und gegebenenfalls wenigstens ein Insektizid enthalten, werden auch in der WO 2007/017040 A2 offenbart. Diese Schrift offenbart jedoch keine Mikroemulsionen, die keine anionischen, oberflächenaktiven Substanzen enthalten.

EP 1 339 281 B1 offenbart eine Mikroemulsion-Formulierung enthaltend Insektizide. Diese Mikroemulsionen enthalten neben den Insektiziden wenigstens ein Lösungsmittel ausgewählt aus der Gruppe bestehend aus Estern von aliphatischen Monocarbonsäuren, Estern von aliphatischen Dicarbonsäuren, Estern von aromatischen Monocarbonsäuren, Estern von aromatischen Dicarbonsäuren und Tri-n-alkylphosphaten, ein Emulgiersystem umfassend wenigstens eine anionische, oberflächenaktive Substanz und zwei oder mehr nichtionische, oberflächenaktive Substanzen, weitere Additive und Wasser. EP 1 339 281 B1 offenbart ebenfalls keine Mikroemulsionen. die Wirkstoffe, aber keine anionischen, oberflächenaktiven Substanzen, enthalten.

WO2008/043807 offenbart phytosanitäre Emulsionszusammensetzungen, die mindestens zwei Lösungsmittel ausgewählt aus a) Alkylacetat, b) Sulfoxid und c) Keton enthalten.

Aufgabe der vorliegenden Erfindung ist es daher, eine Mikroemulsion bereitzustellen, die wenigstens einen Wirkstoff aufweist, und die für eine Reihe von verschiedenen Anwendungen geeignet ist. Sie sollte selbst in einer geringen Menge an Wasser löslich sein und sollte über eine genügend lange Zeit stabil sein, d. h. die Mikroemulsion sollte klar bleiben. Des Weiteren sollte der Nachteil von anionischen Oberflächensubstanzen vermieden werden, die für bestimmte Anwendungen nicht geeignet sind. Des Weiteren sollte die erfindungsgemäße Mikroemulsion gut geeignet sein für Sprüh-Applikationen und für Applikationen an der Pflanze.

Diese Aufgaben werden gelöst durch eine Mikroemulsion, umfassend
(A) 0,1 bis 50 Gew.-% wenigstens einen Wirkstoff, ausgewählt aus der Gruppe bestehend aus Fungiziden, Insektiziden, Nematiziden, Herbiziden, Wachstumsregulatoren und Mischungen davon, als Komponente A,
(B) 0,5 bis 40 Gew.-% wenigstens ein mit Wasser vollständig mischbares Lösungsmittel ausgewählt aus der Gruppe bestehend aus 1-Methoxy-2-propanolacetat, n-Propyl-lactat, gamma-Butyrolacton, DMSO und Mischungen davon, als Komponente B,
(C) 10 bis 40 Gew.-% wenigstens ein nichtionisches Tensid, ausgewählt aus der Gruppe bestehend aus Verbindungen, die durch Alkoxylierung von Verbindungen mit wenigstens einem aktiven Wasserstoffatom entstehen, Alkoxylaten von Alkylphenolen, Blockpolymeren von C₂-C₆-Alkylenoxiden, Alkylglykoside und Mischungen davon, als Komponente C,
(D) 0 bis 10 Gew.-% weitere Additive als Komponente D,
(E) Mindestens 10 Gew.-% Wasser als Komponente E und
(F) 0,1 bis 60 Gew.-% wenigstens ein teilweise mit Wasser mischbares Lösungsmittel, ausgewählt aus der Gruppe bestehend aus Benzylalkohol, C₈/C₁₀-Fettsäuredimethylamiden, Cyclohexanon, 2-Heptanon, Tributylphosphat und Mischungen davon, als Komponente F,
jeweils bezogen auf die gesamte Mikroemulsion, wobei die Summe der Mengen der Komponenten A, B, C, D, E und F 100 Gew.-% beträgt, wobei die Mikroemulsion keine anionischen Tenside enthält.

Die Aufgabe wird auch gelöst durch ein Verfahren zur Herstellung einer solchen Mikroemulsion, wobei die Komponenten A, B, C, E, F gegebenenfalls D miteinander gemischt werden.

Die erfindungsgemäße Aufgabe wird auch gelöst durch die Verwendung der erfindungsgemäßen Mikroemulsion bei der Behandlung von Pflanzen.

Die einzelnen Komponenten der erfindungsgemäßen Mikroemulsion werden im Folgenden detailliert beschrieben:

### Komponente A:

Die erfindungsgemäße Mikroemulsion umfasst 0,1 bis 50 Gew.-%, bevorzugt 0,1 bis 20 Gew.-%, besonders bevorzugt 2 bis 10 Gew.-%, wenigstens eines Wirkstoffs als Komponente A.
Der in der Mikroemulsion gemäß der vorliegenden Erfindung vorliegende, wenigstens eine Wirkstoff ist ausgewählt aus Pestiziden ausgewählt aus der Gruppe bestehend aus Fungiziden, Insektiziden, Nematiziden, Herbiziden, Wachstumsregulatoren und Mischungen davon. Solche Pestizide sind dem Fachmann bekannt und beispielsweise in "The Pesticide Manual, 13th Ed. (2003), The British Crop Protection Council, London." beschrieben.

Geeignete Insektizide sind beispielsweise ausgewählt aus der Gruppe bestehend aus:
A.1. Organo(thio)phosphate: Acephate, Azamethiphos, Azinphos-methyl, Chlorpyrifos, Chlorpyrifos-methyl, Chlorfenvinphos, Diazinon, Dichlorvos, Dicrotophos, Dimethoate, Disulfoton, Ethion, Fenitrothion, Fenthion, Isoxathion, Malathion, Methamidophos, Methidathion, Methyl-parathion, Mevinphos, Monocrotophos, Oxydemeton-methyl, Paraoxon, Parathion, Phenthoat, Phosalone, Phosmet, Phosphamidon, Phorat, Phoxim, Pirimiphos-methyl, Profenofos, Prothiofos, Sulprophos, Tetrachlorvinphos, Terbufos, Triazophos, Trichlorfon;
A.2. Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamate;
A.3. Pyrethroide: Allethrin, Bifenthrin, Cyfluthrin, Cyhalothrin, Cyphenothrin, Cypermethrin, alpha-Cypermethrin, beta-Cypermethrin, zeta-Cypermethrin, deltaMethrin, Esfenvalerate, Etofenprox, Fenpropathrin, Fenvalerate, Imiprothrin, lambda-Cyhalothrin, gamma-Cyhalothrin, Permethrin, Prallethrin, Pyrethrin I und II, Resmethrin, Silafluofen, tau-Fluvalinate, Tefluthrin, Tetramethrin, Tralomethrin, Transfluthrin, Profluthrin, Dimefluthrin;
A.4. Wachstumsregulatoren: a) Chitinsyntheseinhibitoren: Benzoylharnstoffe: Chlorfluazuron, Diflubenzuron, Fucycloxuron, Flufenoxuron, Hexaflumuron, lufenuron, Novaluron, Teflubenzuron, Triflumuron; Buprofezin, Diofenolan, Hexythiazox, Etoxazole, Clofentazine; b) Ecdysone Antagonisten: Halofenozid, Methoxyfenozid, Tebufenozid, Azadirachtin; c) Juvenoide: Pyriproxyfen, Methopren, Fenoxycarb; d) Lipidbiosyntheseinhibitoren: Spirodiclofen, Spiromesifen, Spirotetramat;
A.5. Nicotinreceptoragonisten/antagonisten: Clothianidin, Dinotefuran, Imidacloprid, Thiamethoxam, Nitenpyram, Acetamiprid, Thiacloprid; die Thiazol Verbindung der Formel (I) 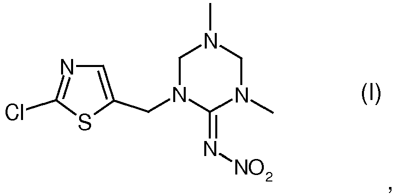
A.6. GABA Antagonisten: Acetoprole, Endosulfan, Ethiprole, Fipronil, Vaniliprol, Pyrafluprol, Pyriprol, die Phenylpyrazol-Verbindung der Formel (II) 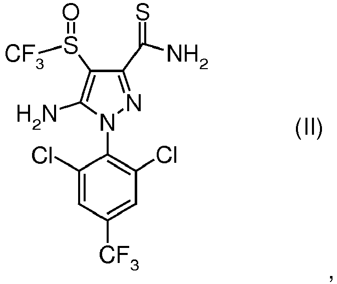
A.7. Makrocyclische Lactoninsektizide: Abamectin, Emamectin, Milbemectin, Lepimectin, Spinosad, die Verbindung der Formel (III) (CAS No. 187166-40-1) 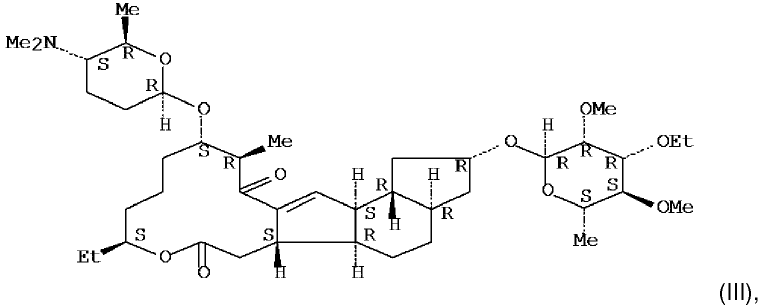
A.8. METI I Verbindungen: Fenazaquin, Pyridaben, Tebufenpyrad, Tolfenpyrad, Flufenerim;
A.9. METI II und III Verbindungen: Acequinocyl, Fluacyprim, Hydramethylnon;
A.10. Entkupplerverbindungen: Chlorfenapyr;
A.11.Oxidative Phosphorylierungsinhibitoren: Cyhexatin, Diafenthiuron, Fenbutatin oxide, Propargit;
A.12. Mauser-wirksamer Verbindungen: Cyromazin;
A.13. Oxidaseinhibitoren mit gemischter Funktion: Piperonyl butoxid;
A.14. Natriumkanal-Blocker: Indoxacarb, Metaflumizone,
A.15. Verschiedene: Benclothiaz, Bifenazate, Cartap, Flonicamid, Pyridalyl, Pymetrozine, Sulfur, Thiocyclam, Flubendiamid, Cyenopyrafen, Flupyrazofos, Cyflumetofen, Amidoflumet, die Aminoquinazolinon Verbindung der Formel (IV) 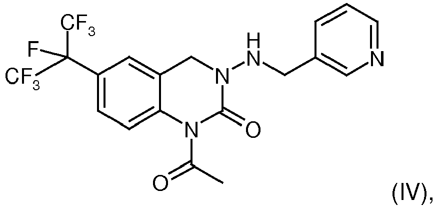 N-R'-2,2-Dihalo-1-R"cyclo-propanecarboxamide-2-(2,6-dichloro-a,a,a-tri-fluoro-p-tolyl)hydrazon or N-R'-2,2-di(R"')propionamide-2-(2,6-dichloro-α,α,α-trifluoro-p-tolyl)-hydrazon, worin R' Methyl oder Ethyl ist, Halo ist Chloro oder Bromo, R" ist Wasserstoff oder Methyl und R"' ist Methyl oder Ethyl, Anthranilamid Verbindungen der Formel (V) 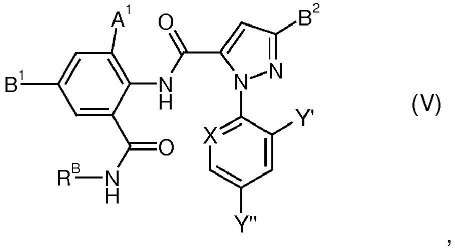 worin A¹ CH₃, Cl, Br oder I ist, X C-H, C-Cl, C-F oder N ist, Y' F, Cl, oder Br ist, Y" H, F, Cl oder CF₃ ist, B¹ Wasserstoff, Cl, Br, I oder CN ist, B² Cl, Br, CF₃, OCH₂CF₃ oder OCF₂H ist, und RB Wasserstoff, CH₃ or CH(CH₃)₂ ist, und Malononitril-Verbindungen wie in JP 2002 284608, WO 02/89579, WO 02/90320, WO 02/90321, WO 04/06677, WO 04/20399, JP 2004 99597, WO 05/68423, WO 05/68432, oder WO 05/63694 beschrieben, bevorzugt die Malononitril-Verbindungen CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, und CF₃CF₂CH₂C(CN)₂CH₂(CF₂)₃CF₂H

Die kommerziell erhältlichen Verbindungen der Gruppe A sind beispielsweise beschrieben in "The Pesticide Manual, 13th Edition, British Crop Protection Council (2003) among other publications. Thioamide der Fomrle (II) und ihre Herstellung sind beschrieben in WO 98/28279. Lepimectin ist bekannt aus "Agro Project, PJB Publications Ltd, November 2004". Benclothiaz und seine Herstellung ist beschrieben in EP-A1 454621. Methidathion und Paraoxon und ihre herstellungen sind beschrieben in "Farm Chemicals Handbook, Volume 88, Meister Publishing Company, 2001." Acetoprol u seine Herstellung sind beschrieben in WO 98/28277. Metaflumizone und seine Herstellung sind beschrieben in EP-A1 462 456. Flupyrazofos wird beschrieben in "Pesticide Science 54, 1988, Seiten 237-243" und in US 4822779. Pyrafluprole und seine Herstellung werden beschrieben in JP 2002193709 und WO 01/00614. Pyriprole und seine Herstellung werden beschrieben in WO 98/45274 und US 6335357. Amidoflumet und seine Herstellung werden beschrieben in US 6221890 und JP 21010907. Flufenerim und seine Herstellung werden beschrieben in WO 03/007717 und WO 03/007718. Cyflumetofen und seine Herstellung werden beschrieben in WO 04/080180. Anthranilamides der Formel (V) und ihre Herstellung werden beschrieben in WO 01/70671; WO 02/48137; WO 03/24222, WO 03/15518, WO 04/67528; WO 04/33468; und WO 05/118552. Die Malononitril-Verbindungen CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H und CF₃CF₂CH₂C(CN)₂CH₂(CF₂)₃CF₂H werden in WO 05/63694 beschrieben.

Das Fungizid kann ausgewählt sein aus der Gruppe bestehend aus
1. Strobilurine wie Azoxystrobin, Dimoxystrobin, Enestroburin, Fluoxastrobin, Kresoxim-methyl, Metominostrobin, Picoxystrobin, Pyraclostrobin, Trifloxystrobin, O-rysastrobin, Methyl(2-chlor-5-[1-(3-methylbenzyloxyimino)ethyl]benzyl)carbamat, Methyl(2-chlor-5-[1-(6-methylpyridin-2-ylmethoxyimino)ethyl]benzyl)carbamat, Methyl-2-(ortho-((2,5-dimethylphenyloxymethylene)phenyl)-3-methoxyacrylat;
2. Carboxamide wie Carboxanilide: Benalaxyl, Benodanil, Boscalid, Bixafen, Carboxin, Ethaboxam, Mepronil, Fenfuram, Fenhexamid, Flutolanil, Furametpyr, Metalaxyl, Ofurace, Oxadixyl, Oxycarboxin, Penthiopyrad, Thifluzamid, Tiadinil, N-(4'-brombiphenyl-2-yl)-4-difluoromethyl-2-methylthiazol-5-carboxamid, N-(4'-trifluoromethylbiphenyl-2-yl)-4-difluoromethyl-2-methylthiazol-5-carboxamid, N-(4'-chlor-3'-fluorbiphenyl-2-yl)-4-difluoromethyl-2-methylthiazol-5-carboxamid, N-(3',4'-dichlor-4-fluorbiphenyl-2-yl)-3-difluormethyl-1-methylpyrazol-4-carboxamid, N-(2-cyanophenyl)-3,4-dichlorisothiazol-5-carboxamid, N-(3',4',5'-Trifluorobiphenyl-2-yl)- 3-difluoromethyl-1-methyl-1H-pyrazol-4-carboxamid, N-[2-(4'-Trifluoromethylthio)-biphenyl]-3-difluoromethyl-1-methyl-1H-pyrazol-4-carboxamid, N-[2-(1,3-Dimethylbutyl)-phenyl]-1,3-dimethyl-5-fluoro-1H-pyrazol-4-carboxamid, N-(2-Bicyclopropyl-2-yl-phenyl)-3-difluoromethyl-1-methyl-1H-pyrazol-4-carboxamid, N-(cis-2-Bicyclopropyl-2-yl-phenyl)-3-difluoromethyl-1-methyl-1H-pyrazol-4-carboxamid, N-(trans-2-Bicyclopropyl-2-yl-phenyl)-3-difluoromethyl-1-methyl-1H-pyrazol-4-carboxamid, N-[1,2,3,4-Tetrahydro-9-(1-methylethyl)-1,4-methanonaphthalen-5-yl]-3-(difluoromethyl)-1-methyl-1H-pyrazol-4-carboxamid; Carbonsäuremorpholide: Dimethomorph, Flumorph; Benzamide: Flumetover, Fluopicolide (Picobenzamid), Zoxamid; andere Carboxamide: Carpropamid, Diclocymet, Mandipropamid, N-(2-(4-[3-(4-chlorphenyl)prop-2-ynyloxy]-3-methoxyphenyl)ethyl)-2-methanesulfonylamino-3-methylbutyramid, N-(2-(4-[3-(4-chlorphenyl)prop-2-ynyloxy]-3-methoxyphenyl)ethyl)-2-ethanesulfonylamino-3-methylbutyramid;
3. Azole wie Triazole: Bitertanol, Bromuconazol, Cyproconazol, Difenoconazol, Diniconazol, Enilconazol, Epoxiconazol, Fenbuconazol, Flusilazol, Fluquinconazol, Flutriafol, Hexaconazol, Imibenconazol, Ipconazol, Metconazol, Myclobutanil, Penconazol, Propiconazol, Prothioconazol, Simeconazol, Tebuconazol, Tetraconazol, Triadimenol, Triadimefon, Triticonazol; Imidazole: Cyazofamid, Imazalil, Pefurazoate, Prochloraz, Triflumizol; Benzimidazole: Benomyl, Carbendazim, Fuberidazol, Thiabendazol; andere: Ethaboxam, Etridiazol, Hymexazol;
4. Stickstoffhaltige heterocyclische Verbindungen wie Pyridine: Fluazinam, Pyrifenox, 3-[5-(4-chlorophenyl)-2,3-dimethylisoxazolidin-3-yl]-pyridin; Pyrimidine: Bupirimat, Cyprodinil, Ferimzone, Fenarimol, Mepanipyrim, Nuarimol, Pyrimethanil; Piperazine: Triforin; Pyrrole: Fludioxonil, Fenpiclonil; Morpholine: Aldimorph, Dodemorph, Fenpropimorph, Tridemorph; Dicarboximide: Iprodion, Procymidon, Vinclozolin; andere: Acibenzolar-S-methyl, Anilazin, Captan, Captafol, Dazomet, Diclomezin, Fenoxanil, Folpet, Fenpropidin, Famoxadon, Fenamidon, Octhilinon, Probenazol, Proquinazid, Pyroquilon, Quinoxyfen, Tricyclazol, 5-Chlor-7-(4-methylpiperidin-1-yl)-6-(2,4,6-trifluorophenyl)-[1,2,4]triazol[1,5-a]pyrimidin, 2-butoxy-6-iod-3-propylchromen-4-on, N,N-dimethyl-3-(3-brom-6-fluor-2-methylindol-1-sulfonyl)-[1,2,4]triazol-1-sulfonamid;
5. Carbamate und Dithiocarbamate wie Dithiocarbamate: Ferbam, Mancozeb, Maneb, Metiram, Metam, Propineb, Thiram, Zineb, Ziram; Carbamate: Diethofencarb, Flubenthiavalicarb, Iprovalicarb, Propamocarb, Methyl 3-(4-chlorphenyl)-3-(2-isopropoxycarbonylamino-3-methylbutyrylamino)propionat, 4-Fluorophenyl-N-(1-(1-(4-cyanophenyl)ethanesulfonyl)but-2-yl)carbamat;
6. Andere Fungizide wie Guanidine: Dodin, Iminoctadin, Guazatin; Antibiotika: Kasugamycin, Polyoxins, Streptomycin, Validamycin A; organometallische verbindungen: Fentinsalze; Schwefel-enthaltende heterocyclylische Verbindungen: Isoprothiolan, Dithianon; Organophosphor-Verbindungen: Edifenphos, Fosetyl, Fosetyl-aluminum, Iprobenfos, Pyrazophos, Tolclofos-methyl, Phosphorsäure und ihre Salze; Organochlor-Verbindungen: Thiophanat-methyl, Chlorothalonil, Dichlofluanid, Tolylfluanid, Flusulfamid, Phthalide, Hexachlorbenzol, Pencycuron, Quintozen; Nitrophenylderivative: Binapacryl, Dinocap, Dinobuton; anorgansiche aktive Verbindungen: Bordeauxmischung, Kupferacetat, Kupferhydroxid, Kupferoxychlorid, basisches Kupfersulfat, Schwefel; andere: Spiroxamin, Cyflufenamid, Cymoxanil, Metrafenon.

Das Herbizid ist beispielsweise ausgewählt aus der Gruppe bestehend aus
b1) Lipidbiosyntheseinhibitoren wie Chlorazifop, Clodinafop, Clofop, Cyhalofop, Diclofop, Fenoxaprop, Fenoxaprop-p, Fenthiaprop, Fluazifop, Fluazifop-P, Haloxyfop, Haloxyfop-P, Isoxapyrifop, Metamifop, Propaquizafop, Quizalofop, Quizalofop-P, Trifop, Alloxydim, Butroxydim, Clethodim, Cloproxydim, Cycloxydim, Profoxydim, Sethoxydim, Tepraloxydim, Tralkoxydim, Butylat, Cycloat, Diallat, Dimepiperat, EPTC, Esprocarb, Ethiolat, Isopolinat, Methiobencarb, Molinat, Orbencarb, Pebulat, Prosulfocarb, Sulfallat, Thiobencarb, Thiocarbazil, Triallat, Vernolat, Benfuresat, Ethofumesat und Bensulid;
b2) ALS Inhibitoren wie Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flupyrsulfuron, Foramsulfuron, Halosulfuron, Imazosulfuron, lodsulfuron, Mesosulfuron, Metsulfuron, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, Imazamethabenz, Imazamox, Imazapic, Imazapyr, Imazaquin, Imazethapyr, Cloransulam, Diclosulam, Florasulam, Flumetsulam, Metosulam, Penoxsulam, Bispyribac, Pyriminobac, Propoxycarbazon, Flucarbazon, Pyribenzoxim, Pyriftalid und Pyrithiobac;
b3) Photosyntheseinhibitoren wir Atraton, Atrazin, Ametryn, Aziprotryn, Cyanazin, Cyanatryn, Chlorazin, Cyprazin, Desmetryn, Dimethametryn, Dipropetryn, Eglinazin, Ipazin, Mesoprazin, Methometon, Methoprotryn, Procyazin, Proglinazin, Prometon, Prometryn, Propazin, Sebuthylazin, Secbumeton, Simazin, Simeton, Simetryn, Terbumeton, Terbuthylazin, Terbutryn, Trietazin, Ametridion, Amibuzin, Hexazinon, Isomethiozin, Metamitron, Metribuzin, Bromacil, Isocil, Lenacil, Terbacil, Brompyrazon, Chloridazon, Dimidazon, Desmedipham, Phenisopham, Phenmedipham, Phenmedipham-ethyl, Benzthiazuron, Buthiuron, Ethidimuron, Isouron, Methabenzthiazuron, Monoisouron, Tebuthiuron, Thiazafluron, Anisuron, Buturon, Chlorbromuron, Chloreturon, Chlorotoluron, Chloroxuron, Difenoxuron, Dimefuron, Diuron, Fenuron, Fluometuron, Fluothiuron, Isoproturon, Linuron, Methiuron, Metobenzuron, Metobromuron, Metoxuron, Monolinuron, Monuron, Neburon, Parafluron, Phenobenzuron, Siduron, Tetrafluron, Thidiazuron, Cyperquat, Diethamquat, Difenzoquat, Diquat, Morfamquat, Paraquat, Bromobonil, Bromoxynil, Chloroxynil, lodobonil, loxynil, Amicarbazon, Bromofenoxim, Flumezin, Methazol, Bentazon, Propanil, Pentanochlor, Pyridat und Pyridafol;
b4) Protoporphyrinogen-IX-oxidase-Inhibitoren wie Acifluorfen, Bifenox, Chlomethoxyfen, Chlornitrofen, Ethoxyfen, Fluorodifen, Fluoroglycofen, Fluoronitrofen, Fomesafen, Furyloxyfen, Halosafen, Lactofen, Nitrofen, Nitrofluorfen, Oxyfluorfen, Fluazolat, Pyraflufen, Cinidon-ethyl, Flumiclorac, Flumioxazin, Flumipropyn, Fluthiacet, Thidiazimin, Oxadiazon, Oxadiargyl, Azafenidin, Carfentrazone, Sulfentrazone, Pentoxazone, Benzfendizone, Butafenacil, Pyraclonil, Profluazol, Flufenpyr, Flupropacil, Nipyraclofen und Etnipromid;
b5) Bleicherherbizide wie Metflurazon, Norflurazon, Flufenican, Diflufenican, Picolinafen, Beflubutamid, Fluridone, Flurochloridone, Flurtamone, Mesotrione, Sulcotrione, Isoxachlortole, Isoxaflutole, Benzofenap, Pyrazolynate, Pyrazoxyfen, Benzobicyclon, Amitrole, Clomazone, Aclonifen, 4-(3-Trifluoromethylphenoxy)- 2-(4-trifluoromethylphenyl)pyrimidin und 3-Heterocyclyl-substitutierte Benzoyl-Derivative der Formel VI, siehe beispielsweise WO 96/26202, WO 97/41116, WO 97/41117 und WO 97/41118 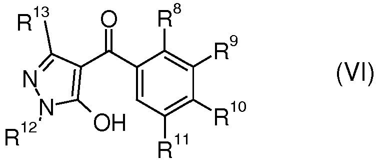 in der die Variablen R⁸ bis R¹³ wie folgt definiert sind:
   - R⁸, R¹⁰: unabhängig voneinander Wasserstoff, halogen, C₁-C₆-Alkyl, C₁-C₆-Haloalkyl, C₁-C₆-Alkoxy, C₁-C₆-Haloalkoxy, C₁-C₆-Alkylthio, C₁-C₆-Alkylsulfinyl or C₁-C₆-Alkylsulfonyl;
   - R⁹: heterocyclischer Rest ausgewählt aus der Gruppe bestehend aus thiazol-2-yl, thiazol-4-yl, thiazol-5-yl, isoxazol-3-yl, isoxazol-4-yl, isoxazol-5-yl, 4,5-dihydroisoxazol-3-yl, 4,5-dihydroisoxazol-4-yl und 4,5-dihydroisoxazol-5-yl, wobei die genannten Reste unsubstituiert oder mono- oder polysubstituiert. d h. mit Halogen, C₁-C₆-Alkyl, C₁-C₄-Alkoxy, C₁-C₄-Haloalkyl, C₁-C₄-Haloalkoxy oder C₁-C₄-Alkylthio mono-, di-, tri- or tetrasubstituiert sein können;
   - R¹¹: Wasserstoff, Halogen oder C₁-C₆-Alkyl;
   - R¹²: C₁-C₆-Alkyl;
   - R¹³: Wasserstoff oder C₁-C₆-Alkyl.
b6) EPSP-Synthaseinhibitoren wie Glyphosate;
b7) Glutamine-Synthaseinhibitoren wie Glufosinate und Bilanaphos;
b8) DHP-Synthaseinhibitoren wie Asulam;
b9) Mitoseinhibitoren wie Benfluralin, Butralin, Dinitramine, Ethalfluralin, Fluchloralin, Isopropalin, Methalpropalin, Nitralin, Oryzalin, Pendimethalin, Prodiamine, Profluralin, Trifluralin, Amiprofos-methyl, Butamifos, Dithiopyr, Thiazopyr, Propyzamide, Tebutam, Chlorthal, Carbetamide, Chlorbufam, Chlorpropham und Propham;
b10) VLCFA-Inhibitors wie Acetochlor, Alachlor, Butachlor, Butenachlor, Delachlor, Diethatyl, Dimethachlor, Dimethenamid, Dimethenamid-P, Metazachlor, Metolachlor, S-Metolachlor, Pretilachlor, Propachlor, Propisochlor, Prynachlor, Terbuchlor, Thenylchlor, Xylachlor, Allidochlor, CDEA, Epronaz, Diphenamid, Napropamide, Naproanilide, Pethoxamid, Flufenacet, Mefenacet, Fentrazamide, Anilofos, Piperophos, Cafenstrole, Indanofan und Tridiphane;
b11) Cellulose-Biosynthe-Inhibitoren wie Dichlobenil, Chlorthiamid, Isoxaben und Flupoxam;
b12) Entkuppler-Herbizide wie Dinofenate, Dinoprop, Dinosam, Dinoseb, Dinoterb, DNOC, Etinofen und Medinoterb;
b13) Auxin-Herbizide wie Clomeprop, 2,4-D, 2,4,5-T, MCPA, MCPA, Thioethyl, Dichlorprop, Dichlorprop-P, Mecoprop, Mecoprop-P, 2,4-DB, MCPB, Chloramben, Dicamba, 2,3,6-TBA, Tricamba, Quinclorac, Quinmerac, Clopyralid, Fluroxypyr, Picloram, Triclopyr und Benazolin;
b14) Auxin-Transportinhibitors wie Naptalam, Diflufenzopyr;
b15) Benzoylprop, Flamprop, Flamprop-M, Bromobutide, Chlorflurenol, Cinmethylin, Methyldymron, Etobenzanid, Fosamine, Metam, Pyributicarb, Oxaziclomefone, Dazomet, Triaziflam und Methylbromid.

### Fungizide und Insektizide sind bevorzugt.

Bevorzugte Insektizide sind Carbamate wie Alanycarb, Benfuracarb, Carbaryl, Carbosulfan, Fenoxycarb, Furathiocarb, Indoxacarb, Methiocarb, Methomyl, Oxamyl, Pirimicarb, Propoxur, Thiodicarb oder Triazamate; Pyrethroide wie Bifenthrin, Cyfluthrin, Cypermethrin, alpha-Cypermethrin, Deltamethrin, Esfenvalerate, Ethofenprox, Fenpropathrin, Fenvalerate, Cyhalothrin, Lambda-Cyhalothrin, Permethrin, Silafluofen, Tau-Fluvalinate, Tefluthrin, Tralomethrin oder Zeta-Cypermethrin; arthropode Wachstumsregulatoren wie Chitin-Synthese-Inhibitoren: Benzoylharnstoffe: Chlorfluazuron, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazole, Clofentazine; Ecdyson-Antagonisten: Halofenozide, Methoxyfenozide, Tebufenozide; Juvenoide: Pyriproxyfen, Methoprene, Fenoxycarb; Lipid-Biosynthese-Inhibitoren: Spirodiclofen; Neonicotinoide wie Acetamiprid, Clothianidin, Flonicamid, Imidacloprid, Nitenpyram, Thiacloprid, Thiamethoxam, Dinetofuran; und Ethiprole, Fipronil, Metaflumizone, N-R'-2,2-dihalo-1-R"cyclo-propancarboxamid-2-(2,6-dichlor-α,α,α-tri-fluor-p-tolyl)hydrazon or N-R'-2,2-di(R"')propionamid-2-(2,6-dichlor-a,a,a-trifluor-p-tolyl)-hydrazon, worin R' Methyl oder Ethyl ist, halo ist Chlor oder Brom, R" ist Wasserstoff oder Methyl und R'" ist Methyl oder Ethyl, Abamectin, Acequinocyl, Amitraz, Azadirachtin, Bifenazate, Bacillus thuringiensis, Bacillus subtilis, Cartap, Chlorfenapyr, Chlordimeform, Cyromazine, Diafenthiuron, , Diofenolan, Emamectin, Endosulfan, Fenazaquin, Formetanate, Formetanate hydrochlorid, Hydramethylnon, Indoxacarb, 4-{(2Z)-2-({[4-(trifluor-methoxy)anilino]carbonyl}hydrazono)-2-[3-(trifluoromethyl)phenyl]ethyl}benzo-nitril, Pyridaben, Pyridalyl, Pymetrozine, Spinosad, Sulfur, Tebufenpyrad, und Thiocyclam.

Besonders bevorzugte Insektizide sind Fipronil, Flufenoxuron, Teflubenzuron, Metaflumizone oder Alphacypermethrin, ganz besonders bevorzugt Fipronil, Flufenoxuron oder Alphacypermethrin.

Bevorzugte Fungizide sind Epoxiconazol, Pyraclostrobin, Kresoxim-methyl, Carbendazim, Metrafenone, Boscalid, Triticonazol, Metconazol, Dimethomorph, Fenpropimorph, Prochloraz, Vinclozolin, Iprodione, Ditianon, Metiram, Tebuconazol, Azoxystrobin, Mancozeb, Trifloxystrobin, Chlorothalonil, Metalaxyl, Fosetyl, Difemoconazol, Cyprodinil, Spiroxamine, Prothioconazol oder Picoxystrobin.

Ganz besonders bevorzugt ist der in der erfindungsgemäßen Mikroemulsion als Komponente A eingesetzte wenigstens eine Wirkstoff ausgewählt aus der Gruppe bestehend aus Fipronil, Metconazol, Pyraclostroin und Mischungen davon.

Fipronil entspricht der IUPAC-Nomenklatur 5-Amino-1-(2,6-dichloro-α,α,α-trifluor-p-tolyl)-4-trifluormethylsulfinylpyrazol-3-carbonitril. Metconazol entspricht der IUPAC-Nomenklatur (1 RS,5RS,1RS,5SR)-5-(4-chlorbenzyl)-2,2-dimethyl-1-(1H-1,2,4-triazol-1-ylmethyl)cyclopentanol. Pyraclostrobin entspricht der IUPAC-Nomenklatur Methyl-{2-[1-(4-chlorphenyl)pyrazol-3-yloxymethyl]phenyl}(methoxy)carbamat

Die erfindungsgemäß vorliegenden Wirkstoffe können nach dem Fachmann bekannten Verfahren hergestellt werden bzw. sind kommerziell erhältlich.

### Komponente B:

Die erfindungsgemäße Mikroemulsion umfasst als Komponente B 0,5 bis 40 Gew.-%, bevorzugt 1,0 bis 25 Gew.-%, besonders bevorzugt 2,0 bis 20 Gew.-% wenigstens ein vollständig mit Wasser mischbares Lösungsmittel ausgewählt aus der Gruppe bestehend aus 1-Methoxy-2-propanolacetat, n-Propyl-lactat, gamma-Butyrolacton, DMSO und Mischungen davon, als Komponente B.

Im Rahmen der vorliegenden Erfindung bedeutet "vollständig mit Wasser mischbar", dass Wasser und das wenigstens eine als Komponente B eingesetzte Lösungsmittel, bevorzugt bei Raumtemperatur, in jedem beliebigen Verhältnis miteinander unter Ausbildung einer Phase gemischt werden können.

Die erfindungsgemäße Mikroemulsion enthält bevorzugt keinen Alkohol, d.h. Monool, Diol und/oder Triol, d. h., dass der Anteil dieser Lösungsmittel bzw. Verbindungen in der erfindungsgemäßen Mikroemulsion bevorzugt unterhalb der Nachweisgrenze, beispielsweise weniger als 0,5 Gew.-%, bevorzugt weniger als 0,1 Gew.-%, besonders bevorzugt weniger als 0,01 Gew.-%, jeweils bezogen auf die gesamte Mikroemulsion, liegt.

### Komponente C:

Die erfindungsgemäße Mikroemulsion umfasst als Komponente C 10 bis 40 Gew.-%, bevorzugt 10 bis 25 Gew.-%, besonders bevorzugt 12 bis 25 Gew.-%, wenigstens eines nichtionischen Tensids.

Das wenigstens eine in der erfindungsgemäßen Mikroemulsion vorhandene nichtionische Tensid ist ausgewählt aus der Gruppe bestehend aus Verbindungen, die durch Alkoxylierung von Verbindungen mit wenigstens einem aktiven Wasserstoffatom entstehen, Alkoxylaten von Alkylphenolen, Blockpolymeren von C₂-C₆-Alkylenoxiden, Alkylglykoside und Mischungen davon.

Bevorzugt werden als nichtionische Tenside wasserlösliche Additionsprodukte, erhalten durch Addition von 3 bis 30 mol eines Alkylenoxids, vorzugsweise Ethylen- oder Propylenoxid, an ein Mol einer organischen, hydrophoben Verbindung aliphatischer oder alkylaromatischer Natur mit 8 bis 24 Kohlenstoffatomen und wenigstens einem reaktiven Wasserstoffatom, insbesondere einer reaktiven Hydroxyl-, Amino-, Amido-oder Carboxylgruppe, eingesetzt.

Beispiele für nichtionische wasserlösliche Additionsprodukte, erhalten durch Addition von mehreren Mol eines Alkylenoxids an ein Mol einer organischen hydrophoben Verbindung, sind folgende:
- Additionsprodukte von Ethylenoxid an aliphatische, lineare oder verzweigte, primäre oder sekundäre Alkohole mit mehr als 8 Kohlenstoffatomen, die sich beispielsweise von Talg- oder Kokosnussfettsäuren ableiten, mit 3 bis 20 Ethylenoxidgruppen, beispielsweise ein C₁₃-Alkohol, ethoxyliert mit 1 bis 15, bevorzugt 5, 7, 11, 15, Einheiten Ethylenoxid,
- Additionsprodukte von Ethylenoxid an Alkylphenole, in denen die Phenole mono-oder polyalkyliert sein können, und die Gesamtzahl der Kohlenstoffatome in der oder den Seitenkette(n) 5 bis 18 beträgt, spezielle Beispiele sind Additionsprodukte von einem Mol Nonylphenol mit 8 bis 15 mol Ethylenoxid oder Polyoxyethylentristyrylphenol ether,
- Additionsprodukte von Ethylenoxid an Fettsäureester, vorzugsweise Monofettsäureestern der Zuckeralkohole Sorbit und Mannit,
- Polyglykoloxycarbonsäureester, erhalten durch Umsetzen von Ethylenoxid mit Carbonsäuren, wobei letztere natürliche Fettsäuren oder synthetische Fettsäuren aus oxidiertem Paraffinwachs mit 8 bis 20 Kohlenstoffatomen oder alkylbenzoe- oder naphthenische Säuren mit 5 bis 18 Kohlenstoffatomen in der Alkylkette sind,
- die Additionsprodukte von Ethylenoxid an Fettacylalkanolamide des Typs C₇-C₁₇-Alkyl-CO-NHC₂H₄OH, C₇-C₁₇-Alkyl-CO-N-(C₂H₄OH)₂
- die Additionsprodukte von Ethylenoxid an C₈-C₁₈-Alkyl-, C₈-C₁₈-Alkenyl- und C₈-C₁₈-Alkylarylamine.
und Mischungen der vorgenannten nichtionischen Tenside.

In einer bevorzugten Ausführungsform umfasst die erfindungsgemäße Mikroemulsion wenigstens ein nichtionisches Tensid ausgewählt aus der Gruppe bestehend aus einem C₁₃-Alkohol, ethoxyliert mit 1 bis 15, bevorzugt 5, 7, 11, 15 Einheiten Ethylenoxid, Polyoxyethylentristyrylphenolether und Mischungen davon.

Erfindungsgemäß können in der Mikroemulsion ein nichtionisches Tensid bzw. eine Mischung von zwei oder mehreren nichtionischen Tensiden vorliegen. Bevorzugt wird eine Kombination von zwei verschiedenen, nichtionischen Tensiden eingesetzt. Das Mengenverhältnis für beide nichtionischen Tenside kann dabei von 1:10 bis 10:1 variieren.

In einer bevorzugten Ausführungsform enthält die erfindungsgemäße Mikroemulsion kein anionisches Tensid. Im Rahmen der vorliegenden Erfindung bedeutet das, dass der Gehalt an anionischem Tensid in der erfindungsgemäßen Mikroemulsion ≤1 Gew.-%, bevorzugt ≤ 0,1 Gew.-%, besonders bevorzugt ≤ 0,01 Gew.-%, ganz besonders bevorzugt 0 Gew.-%, jeweils bezogen auf die gesamte Mikroemulsion, beträgt. Verfahren zur Bestimmung dieses Gehaltes sind dem Fachmann bekannt, beispielsweise Gaschromatographie oder NMR-spektroskopische Methoden.

### Komponente D:

Die erfindungsgemäße Mikroemulsion umfasst als Komponente D 0 bis 10 Gew.-%, bevorzugt 0 bis 5 Gew.-% weitere Additive. Sind in der erfindungsgemäßen Mikroemulsion weitere Additive vorhanden, so liegen diese bevorzugt zu 0,5 bis 10 Gew.-%, bevorzugt 0,5 bis 5 Gew.-%, in der erfindungsgemäßen Mikroemulsion vor.

Bevorzugte in der erfindungsgemäßen Mikroemulsion gegebenenfalls vorliegende Additive sind dem Fachmann bekannt. Bevorzugt sind die Additive ausgewählt aus der Gruppe bestehend aus Befeuchtungsmitteln, Dispergiermitteln, weitere oberflächenaktiven Substanzen, wobei keine anionischen oberflächenaktiven Substanzen zugesetzt werden, anorganischen Salze, beispielsweise NaCl, Na₂SO₄, MgCl₂, Oligo- oder Polyphosphate, Carbonate wie beispielsweise Kalziumcarbonat, Düngemitteln wie Ammoniumsulfat, Ammoniumnitrat, Harnstoff, Phosphor- und Kalium enthaltende Verbindungen und gegebenenfalls weitere Spurenelemente, Antischaummitteln, Bindemitteln, beispielsweise natürliche oder synthetische Substanzen wie Polyaminosäuren, Polyvinylalkohole, Polyvinylpyrrholidon, Polyacrylsäure-Derivate, Polymeren, Farbstoffen, beispielsweise zum Beizen von Saatgut, Stabilisatoren, Bioziden und Mischungen davon. Für die Herstellung von gebrauchsfertigen Lösungen kann zu der erfindungsgemäßen Mikroemulsion bevorzugt ein Additiv ausgewählt aus Ölen wie Pflanzenöle, hochsiedenden Kohlenwasserstoffe wie Kerosin oder Paraffin, und Mischungen davon gegeben werden, wobei keine anionischen oberflächenaktiven Substanzen zugesetzt werden.

Geeignete Farbstoffe sind beispielsweise ausgewählt aus der Gruppe bestehend aus Rhodamin B, C.I. Pigment Red 112, C.I. Solvent Red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108 und Mischungen davon (Namen nach colour-index).

Als weiteres Additiv kann die erfindungsgemäße Mikroemulsion auch Konservierungsmittel enthalten, da auf Wasser basierende Formulierungen gegen eine Kontamination mit Mikroorganismen geschützt werden sollten.

In einer besonders bevorzugten Ausführungsform ist die erfindungsgemäße Mikroemulsion frei von Frostschutzmitteln, d. h. der Gehalt an Frostschutzmitteln beträgt ≤ 1 Gew.-%, bevorzugt ≤ 0,1 Gew.-%, besonders bevorzugt ≤ 0,01 Gew.-%, bestimmbar mit den oben angegebenen Verfahren.

### Komponente E:

Die erfindungsgemäße Mikroemulsion umfasst als Komponente E 10 bis 90 Gew.-%, bevorzugt 10 bis 50 Gew.-%, besonders bevorzugt 10 bis 40 Gew.-% Wasser. Da der Gehalt an Wasser in der erfindungsgemäßen Mikroemulsion bevorzugt gering ist, liegt die erfindungsgemäße Mikroemulsion bevorzugt als Konzentrat vor. Unter Konzentrat wird im Rahmen der Vorliegenden Anmeldung eine Mikroemulsion mit einem Gehalt an Wasser von beispielsweise 10 bis 20 Gew.-%, bezogen auf die Mikroemulsion, verstanden. Liegt die erfindungsgemäße Mikroemulsion als Konzentrat vor, so kann diese durch Zugabe von Wasser, beispielsweise vor der Anwendung, verdünnt werden. Die vorliegende Erfindung betrifft sowohl das Konzentrat, als auch die daraus hergestellte gebrauchsfertige Zubereitung. Aus der erfindungsgemäßen Mikroemulsion kann beispielsweise eine gebrauchsfertige Zubereitung hergestellt werden, indem beispielsweise 0,01 bis 0,10 Gew.-%, bevorzugt 0,03 bis 0,08 Gew.-%, beispielsweise 0,05 Gew.-%, der erfindungsgemäßen Mikroemulsion mit der entsprechenden Menge Wasser gemischt werden. Die Konzentration der gebrauchsfertigen Zubereitung richtet sich dabei nach der gewünschten Anwendung.

Im Rahmen der vorliegenden Erfindung ist Wasser zum einen reines Wasser, welches durch beispielsweise destillative Verfahren von Verunreinigungen befreit worden ist. Erfindungsgemäß kann auch vollentsalztes Wasser eingesetzt werden. Es ist jedoch des Weiteren auch möglich, dass Wasser in Trinkwasser-Qualität eingesetzt wird. Dies bedeutet, dass das eingesetzte Trinkwasser übliche Verunreinigungen in üblichen Mengen aufweist. Besonders bevorzugt wird vollentsalztes Wasser in der erfindungsgemäßen Mikroemulsion eingesetzt.

### Komponente F:

Die erfindungsgemäße Mikroemulsion enthält als Komponente F 0,1 bis 60 Gew.-% wenigstens ein teilweise mit Wasser mischbares Lösungsmittel ausgewählt aus der Gruppe bestehend aus Benzylalkohol, C₈/C₁₀-Fettsäuredimethylamiden, Cyclohexanon, 2-Heptanon, Tributylphosphat und Mischungen davon.

Die erfindungsgemäße Mikroemulsion umfasst als Komponente F 0,1 bis 60 Gew.-%, bevorzugt 5 bis 58 Gew.-%, besonders bevorzugt 20 bis 55 Gew.-%, wenigstens ein teilweise mit Wasser mischbares Lösungsmittel ausgewählt aus der Gruppe bestehend aus Benzylalkohol, C₈/C₁₀-Fettsäuredimethylamiden, Cyclohexanon, 2-Heptanon, Tributylphosphat und Mischungen davon,.

Im Rahmen der vorliegenden Erfindung bedeutet "ein teilweise mit Wasser mischbares Lösungsmittel", dass dieses Lösungsmittel bei Raumtemperatur in einer Menge von 0,1 bis 10 Gew.-% mit Wasser gemischt werden kann, wobei sich nur eine Phase ausbildet. Bei Mengen über 10 Gew.-% bilden sich zwei Phasen.

Die Summe der Mengen der in der erfindungsgemäßen Mikroemulsion vorliegenden Komponenten A, B, C, gegebenenfalls D, E und F beträgt 100 Gew.-%.

In einer bevorzugten Ausführungsform besteht die erfindungsgemäße Mikroemulsion aus den Komponenten A, B, C, E und F, d. h. es sind keine weiteren Substanzen in der Mikroemulsion vorhanden.

Die vorliegende Erfindung betrifft auch ein Verfahren zur Herstellung der erfindungsgemäßen Mikroemulsion, wobei die Komponenten A, B, C, gegebenenfalls D, E und F, bevorzugt in den entsprechenden Mengen, gemischt werden.

Das Mischen kann nach dem Fachmann bekannten Verfahren erfolgen. Beispielsweise werden die individuellen Komponenten gelöst oder emulgiert, bevorzugt bei Raumtemperatur. Falls weitere Hilfsstoffe und Additive vorliegen, werden diese bevorzugt ebenfalls bei Raumtemperatur zugesetzt. Im Allgemeinen können die einzelnen Komponenten in jeder denkbaren Reihenfolge miteinander vermischt werden.

In einer bevorzugten Ausführungsform des erfindungsgemäßen Verfahrens werden zunächst die Komponenten B und F in den entsprechenden Mengen gemischt. Anschließend wird die entsprechende Menge Komponente A zugegeben und bevorzugt so lange gerührt, bis eine Lösung entsteht. Anschließend werden Komponente C und gegebenenfalls vorliegende Additive (Komponente D) zugegeben. Zum Schluss wird die entsprechende Menge Wasser (Komponente E) zugegeben, um die erfindungsgemäße Mikroemulsion zu erhalten. Die einzelnen Zugaben und das Rühren, um Lösungen zu erhalten, werden nach dem Fachmann bekannten Verfahren durchgeführt, beispielsweise in Reaktoren aus Glas oder Metall, in denen entsprechende Vorrichtungen, beispielsweise Rührbalken oder Flügelrührer vorliegen. Das Vermischen der einzelnen Komponenten erfolgt bei einer Temperatur von 0 bis 50 °C, bevorzugt bei Umgebungstemperatur.

Die erfindungsgemäßen Mikroemulsionen zeichnen sich durch eine besonders hohe Lagerstabilität aus, beispielsweise sind die erfindungsgemäßen Mikroemulsionen bei einer Temperatur von 0 °C wenigstens eine Woche, bei einer Temperatur von 54 °C wenigstens 2 Wochen stabil. Des Weiteren ist die erfindungsgemäße Mikroemulsion schon in einer geringen Menge Wasser löslich und mit den gängigen dem Fachmann bekannten Tankmisch-Hilfsmitteln kompatibel. Daher können die erfindungsgemäßen Mikroemulsionen besonders gut für die Behandlung von Pflanzen verwendet werden.

Die vorliegende Erfindung betrifft auch die Verwendung der erfindungsgemäßen Mikroemulsion zur Behandlung von Pflanzen, Bäumen, Boden oder Saatgut, bevorzugt gegen Insekten, Nematoden, Pilze oder Unkräuter, weiter bevorzugt im crop oder non crop Bereich.

In einer bevorzugten Ausführungsform liegt die erfindungsgemäße Mikroemulsion bei der Verwendung in verdünnter wässriger Lösung vor.

Crop-Anwendung bedeutet, dass Teile der Pflanze von außen mit der erfindungsgemäßen Mikroemulsion behandelt werden. Non-Crop-Anwendung bedeutet, dass die Pflanze beispielsweise von innen mit der erfindungsgemäßen Mikroemulsion behandelt wird. Des Weiteren kann die Behandlung an Pflanzen durchgeführt werden, die sich noch im Erdboden, d. h. unterhalb der Oberfläche, befinden (pre-emergence) oder die sich über dem Erdboden befinden (post-emergence).

Bei der Behandlung von Pflanzen kann die erfindungsgemäße Mikroemulsion bevorzugt wie folgt verwendet werden.
- Behandlung der Blätter einer Pflanze durch Besprühen der Blätter mit einer verdünnten wässrigen Lösung der erfindungsgemäßen Mikroemulsion (crop-post-emergence-Anwendung)
- Behandlung des Bodens mit einer verdünnten wässrigen Lösung der erfindungsgemäßen Mikroemulsion (crop-pre-emergence-Anwendung)
- Behandlung des Saatgutes mit der erfindungsgemäßen Mikroemulsion oder einer verdünnten wässrigen Lösung der erfindungsgemäßen Mikroemulsion (crop-Anwendung)
- Einspritzen der erfindungsgemäßen Mikroemulsion oder einer verdünnten wässrigen Lösung der erfindungsgemäßen Mikroemulsion in den Stamm bzw. den Halm einer Pflanze, (non-crop-post-emergence-Anwendung), beispielsweise zur Bekämpfung von Baum-Insekten,
- Aufbringen der erfindungsgemäßen Mikroemulsion oder einer verdünnten wässrigen Lösung der erfindungsgemäßen Mikroemulsion auf und in den Ackerboden, beispielsweise zur Bekämpfung von Insekten wie Termiten, Ameisen (non-crop - Anwendung), bevor das Saatgut ausgebracht wird.

Vorgehensweisen, um eine solche Mikroemulsion auf die zu behandelnden Pflanzen aufzubringen, beispielsweise durch Sprühen, sind dem Fachmann bekannt.

### Beispiele:

### Beispiel 1

In den folgenden Tabellen sind erfindungsgemäße Mikroemulsionen (ME) 1 bis 16 aufgeführt. Die Mengenangaben sind in Gramm. In Kenntnis der Gesamtsumme weiß der Fachmann, wie die Gewichts-Anteile der einzelnen Komponenten bestimmt werden können. Die einzelnen Mikroemulsionen werden durch Zusammengeben der einzelnen Komponenten bei Raumtemperatur hergestellt. Das eingesetzte Fipronil liegt in einer Reinheit von 88,91% vor, das eingesetzte Metconazol liegt in einer Reinheit von 99% vor. In den Tabellen 1 und 2 sind erfindungsgemäße Mikroemulsionen mit Fipronil als Wirkstoff beschrieben. In Tabelle 3 werden erfindungsgemäße Mikroemulsionen mit Metconazol als Wirkstoff genannt.

**Tabelle 1: Mikroemulsionen 1 bis 5 mit Fipronil als Wirkstoff**

| **ME Ifd. Nr.** | **1** | **2** | **3** | **4** | **5** |
|---|---|---|---|---|---|
| | | | | | |
| **Fipronil** | 56,24 | 56,24 | 56,24 | 56,24 | 56,24 |
| | | | | | |
| **2-Heptanon** | 105,0 | - | - | - | - |
| **1-Methoxy-2-propanolacetat** | - | 105,0 | 105,0 | - | - |
| **Cyclohexanon** | - | - | - | 105,0 | 105,0 |
| **n-Propyl-lactat** | - | - | - | - | - |
| **Tributylphosphat** | - | - | - | - | - |
| **gamma-Butyrolacton** | - | - | - | - | - |
| **DMSO** | 25,0 | 25,0 | 25,0 | 25,0 | 25,0 |
| **C8/C10-Diamid** | - | - | - | - | - |
| | | | | | |
| **Mischung von C8/C10-Fettsäuredimethylamiden** | 425,0 | 425,0 | 425,0 | 425,0 | 425,0 |
| | | | | | |
| **Polyoxyethylen-tristyrylphenyl-ether** | 160,0 | 180,0 | 180,0 | 140,0 | 180,0 |
| **C13 Oxoalkohol 5 EO** | 40,0 | 20,0 | - | 60,0 | - |
| **C13 Oxoalkohol 7 EO** | | | 20,0 | | 20,0 |
| **C13 Oxoalkohol 6 EO** | - | - | - | - | |
| | | | | | |
| **H₂O dest.** | 189,0 | 189,0 | 189,0 | 189,0 | 189,0 |
| **Summe** | 1000,2 | 1000,2 | 1000,2 | 1000,2 | 1000,2 |

**Tabelle 2: Mikroemlusionen 6 bis 10 mit Fipronil als Wirkstoff**

| **ME If. Nr.** | **6** | **7** | **8** | **9** | **10** |
|---|---|---|---|---|---|
| | | | | | |
| **Fipronil** | 56,24 | 56,24 | 56,24 | 56,24 | 56,24 |
| | | | | | |
| **2-Heptanon** | - | - | - | - | - |
| **1-Methoxy-2-propanolacetat** | - | - | - | - | - |
| **Cyclohexanon** | - | - | - | - | - |
| **n-Propyl-lactat** | 105,0 | 105,0 | - | - | - |
| **Tributylphosphat** | - | - | 105,0 | - | - |
| **gamma-Butyrolacton** | - | - | - | 105,0 | 105,0 |
| **DMSO** | 25,0 | 25,0 | 25,0 | 25,0 | 25,0 |
| | | | | | |
| **Mischung von C8/C10-Fettsäuredimethylamiden** | 425,0 | 425,0 | 425,0 | 425,0 | 425,0 |
| | | | | | |
| **Polyoxyethylen-tristyrylphenyl-ether** | 160,0 | 160,0 | 190,0 | 190,0 | 190,0 |
| **C13 Oxoalkohol 5 EO** | 40,0 | - | - | 10,0 | - |
| **C13 Oxoalkohol 7 EO** | - | 40,0 | - | - | 10,0 |
| **C13 Oxoalkohol 6 EO** | - | - | 10,0 | - | - |
| | | | | | |
| **H₂O dest.** | 189,0 | 189,0 | 189,0 | 189,0 | 189,0 |
| **Summe** | 1000,2 | 1000,2 | 1000,2 | 1000,2 | 1000,2 |

**Tabelle 3: Mikroemulsionen 11 bis 16 mit Metconazol als Wirkstoff**

| **ME Ifd. Nr.** | **11** | **12** | **13** | **14** | **15** | **16** |
|---|---|---|---|---|---|---|
| | | | | | | |
| **Metconazol** | 50,5 | 50,5 | 50,5 | 50,5 | 50,5 | 50,5 |
| | | | | | | |
| **Benzylalkohol** | 150,0 | - | - | 150,0 | - | - |
| **Cyclohexanon** | - | 150,0 | - | - | 150,0 | - |
| **1-Methoxy-2-propanolacetat** | - | - | 150,0 | - | - | 150,0 |
| **n-Propyl-lactat** | - | - | - | 50,0 | 50,0 | 50,0 |
| **DMSO** | 50,0 | 50,0 | 50,0 | - | - | - |
| | | | | | | |
| **Mischung von C8/C10-Fettsäuredimethylamiden** | 300,0 | 300,0 | 300,0 | 300,0 | 300,0 | 300,0 |
| | | | | | | |
| **Polyoxyethylen tristyryl phenyl ether** | 180,0 | 200,0 | 200,0 | 180,0 | 200,0 | 200,0 |
| **C13 Oxoalkohol 5 EO** | 20,0 | - | - | 20,0 | - | - |
| | | | | | | |
| **H₂O dest.** | 249,5 | 249,5 | 249,5 | 249,5 | 249,5 | 249,5 |
| **Summe** | 1000,0 | 1000,0 | 1000,0 | 1000,0 | 1000,0 | 1000,0 |

### Beispiel 2

In den folgenden Tabellen 3 bis 7 sind anwendungsspezifische Eigenschaften der oben genannten Mikroemulsionen 2, 6 und 10 genannt.

**Tabelle 3**

| **ME Ifd. Nummer** | | **2** | **6** | **10** |
|---|---|---|---|---|
| | | | | |
| **optische Beurteilung** | zu Beginn | klar | klar | klar |
| | nach 2 Wochen Lagerung bei 54°C | klar | klar | klar |
| | nach 6 Wochen Lagerung bei -10°C | klar | klar | klar |
| | nach 6 Wochen Lagerung bei 50°C | klar | klar | klar |
| | nach 8 Wochen Lagerung bei 40°C | klar | klar | klar |
| | nach 12 Wochen Lage- | klar | klar | klar |
| | rung bei 35°C | | | |
| | | | | |
| **Wirkstoffkonzentration in der Mikroemulsion absolut [g/l]** | zu Beginn | 47,25 | 48,98 | 50,22 |
| | nach 2 Wochen Lagerung bei 54°C | 46,63 | 49,00 | 50,45 |
| | nach 6 Wochen Lagerung bei -10°C | 46,68 | 48,81 | 50,25 |
| | nach 6 Wochen Lagerung bei 50°C | 46,48 | 48,95 | 50,25 |
| | nach 8 Wochen Lagerung bei 40°C | 46,78 | 48,95 | 50,55 |
| | nach 12 Wochen Lagerung bei 35°C | 46,78 | 48,51 | 50,45 |
| | | | | |
| **Wirkstoffkonzentration in der Mikroemulsion relativ [%]** | zu Beginn | 100,00 | 100,00 | 100,00 |
| | nach 2 Wochen Lagerung bei 54°C | 98,69 | 100,04 | 100,46 |
| | nach 6 Wochen Lagerung bei -10°C | 98,79 | 99,65 | 100,06 |
| | nach 6 Wochen Lagerung bei 50°C | 98,37 | 99,94 | 100,06 |
| | nach 8 Wochen Lagerung bei 40°C | 99,01 | 99,94 | 100,66 |
| | nach 12 Wochen Lagerung bei 35°C | 99,01 | 99,04 | 100,46 |

**Tabelle 4**

| **ME Ifd. Nummer** | | **2** | **6** | **10** |
|---|---|---|---|---|
| | | | | |
| **pH (unverdünnt)** | zu Beginn | 7,0 | 5,6 | 6,1 |
| | nach 2 Wochen Lagerung bei 54°C | 6,8 | 5,1 | 5,8 |
| | nach 6 Wochen Lagerung -10°C | 7,0 | 5,7 | 6,2 |
| | nach 6 Wochen Lagerung bei 50°C | 6,7 | 4,9 | 5,5 |
| | nach 8 Wochen Lagerung bei 40°C | 6,9 | 5,0 | 5,8 |
| | nach 12 Wochen Lagerung bei 35°C | 6,9 | 5,0 | 5,8 |
| | | | | |
| **pH (50% verdünnt)** | zu Beginn | 6,2 | 4,4 | 4,5 |
| | nach 2 Wochen Lagerung bei 54°C | 5,0 | 3,9 | 4,2 |
| | nach 6 Wochen Lagerung bei -10°C | 6,4 | 4,6 | 4,7 |
| | nach 6 Wochen Lagerung bei 50°C | 5,6 | 3,7 | 4,0 |
| | nach 8 Wochen Lagerung bei 40°C | 5,9 | 3,8 | 4,2 |
| | nach 12 Wochen Lagerung bei 35°C | 5,9 | 3,9 | 4,3 |
| | | | | |
| **pH (1% verdünnt)** | zu Beginn | 5,2 | 4,6 | 4,4 |
| | nach 2 Wochen Lagerung bei 54°C | 5,1 | 4,0 | 4,2 |
| | nach 6 Wochen Lagerung bei -10°C | 5,3 | 4,6 | 4,5 |
| | nach 6 Wochen Lagerung bei 50°C | 5,0 | 4,0 | 4,0 |
| | nach 8 Wochen Lagerung bei 40°C | 5,1 | 4,2 | 4,2 |
| | nach 12 Wochen Lagerung bei 35°C | 5,1 | 4,2 | 4,2 |

**Tabelle 5**

| **ME Ifd. Nummer** | | **2** | **6** | **10** |
|---|---|---|---|---|
| | | | | |
| **Oberflächenspannung (unverdünnt) [mN/m]** | zu Beginn | 30,8 | 31,0 | 32,1 |
| | nach 2 Wochen Lagerung bei 54°C | 28,9 | 31,0 | 31,6 |
| | nach 6 Wochen Lagerung bei -10°C | 30,6 | 31,1 | 32,1 |
| | nach 6 Wochen Lagerung bei 50°C | 30,5 | 31,0 | 31,6 |
| | nach 8 Wochen Lagerung bei 40°C | 30,4 | 30,8 | 32,0 |
| | nach 12 Wochen Lagerung bei 35°C | 30,6 | 31,0 | 32,2 |
| | | | | |
| **Oberflächenspannung (50% verdünnt) [mN/m]** | zu Beginn | 28,4 | 28,5 | 23,6 |
| | nach 2 Wochen Lagerung bei 54°C | 27,5 | 28,4 | 28,6 |
| | nach 6 Wochen Lagerung bei -10°C | 25,9 | 28,1 | 28,9 |
| | nach 6 Wochen Lagerung bei 50°C | 28,5 | 28,4 | 28,1 |
| | nach 8 Wochen Lagerung bei 40°C | 28,4 | 28,0 | 29,1 |
| | nach 12 Wochen Lagerung bei 35°C | 24,2 | 28,1 | 28,7 |
| | | | | |
| **Viskosität (unverdünnt) bei D=100 1/s [mPas]** | zu Beginn | 30 | 33 | 26 |
| | nach 2 Wochen Lagerung bei 54°C | 31 | 32 | 27 |
| | nach 6 Wochen Lagerung bei -10°C | 31 | 33 | 27 |
| | nach 6 Wochen Lagerung bei 50°C | 32 | 33 | 28 |
| | nach 8 Wochen Lagerung bei 40°C | 31 | 30 | 27 |
| | nach 12 Wochen Lagerung bei 35°C | 26 | 31 | 27 |

Für die Verdünnung wird bidestilliertes Wasser verwendet.

**Tabelle 6**

| **ME Ifd. Nummer** | | **2** | **6** | **10** |
|---|---|---|---|---|
| | | | | |
| Schaumtest nach Ross-Miles (50% verdünnt) in cipac-d-Wasser | zu Beginn | 90 mm | 90 mm | 130 mm |
| | nach 1 Minute | 90 mm | 70 mm | 120 mm |
| | nach 3 Minuten | 80 mm | 70 mm | 120 mm |
| | nach 5 Minuten | 60 mm | 50 mm | 50 mm |
| | nach 15 Minuten | 10 mm | 10 mm | 10 mm |

### Beispiel 3

Mit den erfindungsgemäßen Mikroemulsionen 11 bis 16 werden Versuche zur Bestimmung der Pflanzenschutzwirkung unternommen. Dazu werden die Mikroemulsionen 11 bis 16 in Konzentrationen von 25, 50, 75 und 100 ppm auf erkrankte Weizen-Pflanzen durch Gießen aufgebracht. Als Vergleichsversuche dienen die Versuche 1 bis 12, in denen eine Standard-Zubereitung gemäß Stand der Technik, enthaltend einen C₉-C₁₁-Alcohol ethoxyliert mit 6 Einheiten Ethylenoxid, (Standard, Versuche 1 bis 4), eine Emulsion (Versuche 5 bis 8) und eine Suspension (Versuche 9 bis 12) verwendet werden. In allen Versuchen ist Metconazol der Wirkstoff. Zur Auswertung werden die Pflanzen gezählt, die nach der Behandlung noch erkrankt sind.

Die Ergebnisse der Versuche sind in Tabelle 7 wiedergegeben.

**Tabelle 7**

| | | | **Anzahl noch erkrankter Pflanzen [%]** | | | |
|---|---|---|---|---|---|---|
| **Versuchsnr.** | **Probe/ME** | **Konzentration in ppm** | **1. Topf** | **2. Topf** | **3. Topf** | **Ø** |
| **1** | Standard | 100 | 0 | 0 | 0 | 0 |
| **2** | | 75 | 0 | 0 | 0 | 0 |
| **3** | | 50 | 7 | 3 | 3 | 4 |
| **4** | | 25 | 60 | 40 | 50 | 50 |
| **5** | Emulsion | 100 | 7 | 7 | 10 | 8 |
| **6** | | 75 | 50 | 40 | 50 | 47 |
| **7** | | 50 | 80 | 80 | 80 | 80 |
| **8** | | 25 | 90 | 90 | 90 | 90 |
| **9** | Suspension | 100 | 70 | 60 | 80 | 70 |
| **10** | | 75 | 70 | 70 | 80 | 73 |
| **11** | | 50 | 80 | 80 | 80 | 80 |
| **12** | | 25 | 90 | 90 | 90 | 90 |
| **13** | 11 | 100 | 0 | 0 | 0 | 0 |
| **14** | | 75 | 0 | 0 | 0 | 0 |
| **15** | | 50 | 7 | 7 | 7 | 7 |
| **16** | | 25 | 70 | 60 | 60 | 63 |
| **17** | 12 | 100 | 0 | 0 | 0 | 0 |
| **18** | | 75 | 1 | 3 | 0 | 1 |
| **19** | | 50 | 5 | 5 | 7 | 6 |
| **20** | | 25 | 30 | 30 | 50 | 37 |
| **21** | 13 | 100 | 0 | 0 | 0 | 0 |
| **22** | | 75 | 0 | 1 | 3 | 1 |
| **23** | | 50 | 3 | 5 | 5 | 4 |
| **24** | | 25 | 70 | 60 | 60 | 63 |
| **25** | 14 | 100 | 0 | 0 | 0 | 0 |
| **26** | | 75 | 1 | 0 | 1 | 1 |
| **27** | | 50 | 5 | 5 | 5 | 5 |
| **28** | | 25 | 60 | 60 | 50 | 57 |
| **29** | 15 | 100 | 0 | 0 | 0 | 0 |
| **30** | | 75 | 0 | 0 | 1 | 0 |
| **31** | | 50 | 5 | 10 | 10 | 8 |
| **32** | | 25 | 50 | 60 | 50 | 53 |
| **33** | 16 | 100 | 0 | 0 | 0 | 0 |
| **34** | | 75 | 0 | 1 | 3 | 1 |
| **35** | | 50 | 3 | 5 | 7 | 5 |
| **36** | | 25 | 60 | 50 | 60 | 57 |

## Patentansprüche

1. Mikroemulsion, umfassend
(A) 0,1 bis 50 Gew.-% wenigstens einen Wirkstoff, ausgewählt aus der Gruppe bestehend aus Fungiziden, Insektiziden, Nematiziden, Herbiziden, Wachstumsregulatoren und Mischungen davon, als Komponente A,
(B) 0,5 bis 40 Gew.-% wenigstens ein Lösungsmittel ausgewählt aus der Gruppe bestehend aus 1-Methoxy-2-propanolacetat, n-Propyl-lactat, gamma-Butyrolacton, Dimethylsulfoxid (DMSO) und Mischungen davon, als Komponente B,
(C) 10 bis 40 Gew.-% wenigstens ein nichtionisches Tensid, ausgewählt aus der Gruppe bestehend aus Verbindungen, die durch Alkoxylierung von Verbindungen mit wenigstens einem aktiven Wasserstoffatom entstehen, Alkoxylaten von Alkylphenolen, Blockpolymeren von C₂-C₆-Alkylenoxiden, Alkylglykoside und Mischungen davon, als Komponente C,
(D) 0 bis 10 Gew.-% weitere Additive als Komponente D,
(E) Mindestens 10 Gew.-% Wasser als Komponente E und
(F) 0,1 bis 60 Gew.-% wenigstens ein teilweise mit Wasser mischbares Lösungsmittel, ausgewählt aus der Gruppe bestehend aus Benzylalkohol, C8/C10-Fettsäuredimethylamiden, Cyclohexanon, 2-Heptanon, Tributylphosphat und Mischungen davon, als Komponente F,
jeweils bezogen auf die gesamte Mikroemulsion, wobei die Summe der Mengen der Komponenten A, B, C, D, E und F 100 Gew.-% beträgt, und die Mikroemulsion keine anionischen Tenside enthält.

2. Mikroemulsion nach Anspruch 1, **dadurch gekennzeichnet, dass** die nichtionische Tenside wasserlösliche Additionsprodukte sind, erhalten durch Addition von 3 bis 30 mol eines Alkylenoxids an ein Mol einer organischen, hydrophoben Verbindung aliphatischer oder alkylaromatischer Natur mit 8 bis 24 Kohlenstoffatomen und wenigstens einer reaktiven Hydroxyl-, Amino-, Amido- oder Carboxylgruppe.

3. Mikroemulsion nach einem der Ansprüche 1 oder 2, **dadurch gekennzeichnet, dass** diese aus den Komponenten A, B, C, E und F besteht.

4. Mikroemulsion nach einem der Ansprüche 1 bis 3, **dadurch gekennzeichnet, dass** das wenigstens eine nichtionisches Tensid ausgewählt ist aus der Gruppe bestehend aus einem C₁₃-Alkohol, ethoxyliert mit 1 bis 15 Einheiten Ethylenoxid, Polyoxyethylentristyrylphenolether und Mischungen davon.

5. Mikroemulsion nach einem der Ansprüche 1 bis 4, **dadurch gekennzeichnet, dass** die Mikroemulsion 0,1 bis 20 Gew.-% der Kompontente A umfasst.

6. Mikroemulsion nach einem der Ansprüche 1 bis 5, **dadurch gekennzeichnet, dass** die Mikroemulsion 1,0 bis 25 Gew.-% der Kompontente B umfasst.

7. Mikroemulsion nach einem der Ansprüche 1 bis 6, **dadurch gekennzeichnet, dass** die Mikroemulsion 10 bis 50 Gew.-% der Kompontente E umfasst.

8. Mikroemulsion nach einem der Ansprüche 1 bis 7, **dadurch gekennzeichnet, dass** die Mikroemulsion 20 bis 60 Gew.-% der Kompontente F umfasst.

9. Verfahren zur Herstellung einer Mikroemulsion nach einem der Ansprüche 1 bis 8, **dadurch gekennzeichnet, dass** die Komponenten A, B, C, gegebenenfalls D, E und F gemischt werden.

10. Verfahren nach Anspruch 9, **dadurch gekennzeichnet, dass** das Mischen bei Raumtemperatur durchgeführt wird.

11. Verwendung der Mikroemulsion nach einem der Ansprüche 1 bis 8 zur Behandlung von Pflanzen, Bäumen, Boden oder Saatgut.

12. Verwendung nach Anspruch 11 gegen Insekten, Nematoden, Pilze oder Unkräuter.

13. Verwendung nach einem der Ansprüche 11 bis 12, **dadurch gekennzeichnet, dass** die Mikroemulsion in verdünnter wässriger Lösung vorliegt.

## Claims

1. A microemulsion comprising
(A) 0.1 to 50% by weight of at least one active substance selected from the group consisting of fungicides, insecticides, nematicides, herbicides, growth regulators and mixtures of these as component A,
(B) 0.5 to 40% by weight of at least one solvent selected from the group consisting of 1-methoxy-2-propanol acetate, n-propyl lactate, gamma-butyrolactone, dimethyl sulfoxide (DMSO) and mixtures of these as component B,
(C) 10 to 40% by weight of at least one nonionic surfactant selected from the group consisting of compounds which are formed by alkoxylating compounds with at least one active hydrogen atom, alkoxylates of alkylphenols, block polymers of C₂-C₆-alkylene oxides, alkylglycosides and mixtures of these as component C,
(D) 0 to 10% by weight of further additives as component D,
(E) at least 10% by weight of water as component E and
(F) 0.1 to 60% by weight of at least one solvent which is partially miscible with water, selected from the group consisting of benzyl alcohol, C8/C10-fatty acid dimethyl amides, cyclohexanone, 2-heptanone, tributyl phosphate and mixtures of these as component F,
in each case based on the total microemulsion, where the total of the amounts of components A, B, C, D, E and F amounts to 100% by weight and where the microemulsion does not comprise any anionic surfactants.

2. The microemulsion according to claim 1, wherein the nonionic surfactants are water-soluble adducts obtained by addition of 3 to 30 moles of an alkylene oxide to one mole of an organic hydrophobic compound which is aliphatic or alkyl aromatic in nature and which has 8 to 24 carbon atoms and at least one reactive hydroxyl, amino, amido or carboxyl group.

3. The microemulsion according to one of claims 1 or 2, which consists of components A, B, C, E and F.

4. The microemulsion according to any of claims 1 to 3, wherein the at least one nonionic surfactant is selected from the group consisting of a C₁₃-alcohol, ethoxylated with 1 to 15 ethylene oxide units, polyoxyethylene tristyryl phenol ether and mixtures of these.

5. The microemulsion according to any of claims 1 to 4, wherein the microemulsion comprises 0.1 to 20% by weight of component A.

6. The microemulsion according to any of claims 1 to 5, wherein the microemulsion comprises 1.0 to 25% by weight of component B.

7. The microemulsion according to any of claims 1 to 6, wherein the microemulsion comprises 10 to 50% by weight of component E.

8. The microemulsion according to any of claims 1 to 7, wherein the microemulsion comprises 20 to 60% by weight of component F.

9. A process for the preparation of a microemulsion according to any of claims 1 to 8, wherein the components A, B, C, optionally D, E and F are mixed.

10. The process according to claim 9, wherein the mixing process is carried out at room temperature.

11. The use of the microemulsion according to any of claims 1 to 8 for the treatment of plants, trees, soil or seed.

12. The use according to claim 11 against insects, nematodes, fungi or weeds.

13. The use according to any of claims 11 to 12, wherein the microemulsion is present in a dilute aqueous solution.

## Revendications

1. Microémulsion, comprenant :
(A) 0,1 à 50 % en poids d'au moins un agent actif, choisi dans le groupe constitué par les fongicides, les insecticides, les nématicides, les herbicides, les régulateurs de croissance et leurs mélanges, en tant que composant A,
(B) 0,5 à 40 % en poids d'au moins un solvant choisi dans le groupe constitué par l'acétate de 1-méthoxy-2-propanol, le lactate de n-propyle, la gamma-butyrolactone, le diméthylsulfoxyde (DMSO) et leurs mélanges, en tant que composant B,
(C) 10 à 40 % en poids d'au moins un tensioactif non ionique, choisi dans le groupe constitué par les composés formés par alcoxylation de composés contenant au moins un atome d'hydrogène actif, les alcoxylates d'alkylphénols, les polymères séquencés d'oxydes d'alkylène en C₂-C₆, les alkylglycosides et leurs mélanges, en tant que composant C,
(D) 0 à 10 % en poids d'autres additifs en tant que composant D,
(E) au moins 10 % en poids d'eau en tant que composant E et
(F) 0,1 à 60 % en poids d'au moins un solvant partiellement miscible avec l'eau, choisi dans le groupe constitué par l'alcool benzylique, les diméthylamides d'acides gras en C8/C10, la cyclohexanone, la 2-heptanone, le phosphate de tributyle et leurs mélanges, en tant que composant F,
à chaque fois par rapport à la microémulsion totale, la somme des quantités des composants A, B, C, D, E et F étant de 100 % en poids, et la microémulsion ne contenant pas de tensioactifs anioniques.

2. Microémulsion selon la revendication 1, **caractérisée en ce que** les tensioactifs non ioniques sont des produits d'addition solubles dans l'eau, obtenus par addition de 3 à 30 moles d'un oxyde d'alkylène sur une mole d'un composé organique hydrophobe de nature aliphatique ou alkylaromatique, contenant 8 à 24 atomes de carbone et au moins un groupe réactif hydroxyle, amino, amido ou carboxyle.

3. Microémulsion selon l'une quelconque des revendications 1 ou 2, **caractérisée en ce que** celle-ci est constituée par les composants A, B, C, E et F.

4. Microémulsion selon l'une quelconque des revendications 1 à 3, **caractérisée en ce que** ledit au moins un tensioactif non ionique est choisi dans le groupe constitué par un alcool en C₁₃, éthoxylé avec 1 à 15 unités d'oxyde d'éthylène, l'éther de polyoxyéthylène-tristyryl-phénol et leurs mélanges.

5. Microémulsion selon l'une quelconque des revendications 1 à 4, **caractérisée en ce que** la microémulsion comprend 0,1 à 20 % en poids du composant A.

6. Microémulsion selon l'une quelconque des revendications 1 à 5, **caractérisée en ce que** la microémulsion comprend 1,0 à 25 % en poids du composant B.

7. Microémulsion selon l'une quelconque des revendications 1 à 6, **caractérisée en ce que** la microémulsion comprend 10 à 50 % en poids du composant E.

8. Microémulsion selon l'une quelconque des revendications 1 à 7, **caractérisée en ce que** la microémulsion comprend 20 à 60 % en poids du composant F.

9. Procédé de fabrication d'une microémulsion selon l'une quelconque des revendications 1 à 8, **caractérisé en ce que** les composants A, B, C, éventuellement D, E et F sont mélangés.

10. Procédé selon la revendication 9, **caractérisé en ce que** le mélange est réalisé à température ambiante.

11. Utilisation de la microémulsion selon l'une quelconque des revendications 1 à 8 pour le traitement de plantes, d'arbres, du sol ou de graines.

12. Utilisation selon la revendication 11 contre des insectes, des nématodes, des champignons ou des mauvaises herbes.

13. Utilisation selon l'une quelconque des revendications 11 à 12, **caractérisée en ce que** la microémulsion se présente dans une solution aqueuse diluée.
